# EUROPÄISCHE PATENTSCHRIFT

(11) **EP 1 079 157 B1**
(45) Veröffentlichungstag und Bekanntmachung des Hinweises auf die Patenterteilung: **20.10.2004**
(21) Anmeldenummer: 99116681.0
(22) Anmeldetag: 26.08.1999
(51) Int. Cl.: F16J 15/34

(54) **Gleitringdichtung**
Mechanical seal
Garniture mécanique d'étanchéité

(43) Veröffentlichungstag der Anmeldung: 28.02.2001
(73) Patentinhaber: Eagle Euroseals GmbH, 21107 Hamburg (DE)
(72) Erfinder: Günther, Hans-Werner Dipl.-Ing., 31623 Drakenburg (DE)
(74) Vertreter: Glawe, Delfs, Moll & Partner

(56) Entgegenhaltungen:
- EP-A- 0 105 140
- FR-A- 2 519 400
- US-A- 3 190 704

## Beschreibung

Die Erfindung betrifft eine Gleitringdichtung mit einem Gleitring und einem damit unter der Kraft einer Feder dichtend zusammenwirkenden Gegenring, wobei der Gleitring von einem Packungsring gebildet und in einer ihn an drei Seiten umfassenden Kammer gehalten ist.

Im Betrieb axialer Gleitringdichtungen zur Abdichtung einer umlaufenden Welle gegen das Wellengehäuse können Kantenpressungen aufgrund von Abweichungen der Dichtflächen von der planparallelen Form entstehen. Um derartige Belastungen ohne Schaden schnell abzubauen, wird üblicherweise eine der Gleitflächen aus einem feinverschleißfähigen Werkstoff, z.B. Kunstkohle, hergestellt. Die andere der beiden Gleitflächen soll möglichst verschleißfest sein; verbreitet ist der Einsatz von Keramikringen. Um der Gefahr des Sprödbruchs keramischer Werkstoffe entgegenzuwirken, ist es bekannt (W. A. Marzinkowski und J. S. Gaft, 10. Dichtungstagung am 22./23.04.1997 in Steinfurth; A. Sagorulko und J. Gaft, ...; US-A-3190704; FR-A-2519400), als Gleitring einen Packungsring einzusetzen. Aufgrund seiner Nachgiebigkeit ist er unempfindlich gegen Kantenpressung, Taumelschlag- und Schwingungsbelastung. Packungsringe sind weich-plastische Dichtkörper, die in Stopfbuchsen eingesetzt werden. Dort beruht ihre Dichtwirkung auf ihrer Fähigkeit, eine axiale Kompression in eine radiale Dehnung umzusetzen. Ihre beständige Anlage an den Gegendichtflächen der Welle und des Gehäuses erreicht man in Stopfbuchsen dadurch, daß sie zwischen den Umfangsflächen der Welle und des Gehäuses sowie zwischen axial zusammengepreßten Stirnflächen gekammert sind. Entsprechend diesem Vorbild hat man den Packungsring auch bei seinem Einsatz als Gleitring in einer axialen Gleitringdichtung gekammert eingebaut. Das heißt, daß er in einer ihn an drei Seiten einschließenden Nut und dem in deren Öffnung eindringenden Gegenring gekammert ist. Unter der zwischen Gleitring und Gegenring wirkenden axialen Pressung wird die Form des inkompressiblen Packungsrings aufrechterhalten, da seine radiale Ausdehnung durch die seitliche Kammerung verhindert wird. Diese Anordnung hat aber nur begrenzte Toleranz gegenüber radialen Lageveränderungen wie z.B. bei Mittenversatz der Welle bei unruhigem Lauf oder bei Winkelversatz. Das beruht auf der Eingrenzung der radialen Bewegungsfreiheit des Gegenrings zum einen zwischen den vorstehenden Flanken der den Gleitring enthaltenen Nut und zum anderen in der von dem Gegenring in der Stirnfläche des Gleitrings eingedrückten Vertiefung

Es ist auch eine Dichtungsanordnung bekannt (EP-A-105140, Fig. 8), bei welcher ein von einer Packung gebildeter Gleitring stirnseitig mit einem Gegenring zusammenwirkt. Die Dichtpressung wird nicht durch eine Feder, sondern wie bei Stopfbuchsen durch Spannschrauben erzeugt. Der Gegenring hat eine geringere radiale Ausdehnung als der Packungsring. Man muß daher damit rechnen, daß er sich unter der Pressung der Spannschrauben axial in den Packungsring hinein vertieft einbettet. Wenn relative Laufunterschiede zwischen den Dichtungsringen in radialer und axialer Richtung. auszugleichen sind, schneidet die Kante des Gegenrings in die Packung ein und führt allmählich zu deren Zerstörung. Da der Packungsring nicht gekammert ist, wird der freie und ungeschützte Rand der Packung allmählich ausfransen und die Zerstörung des übrigen Teils der Packung nach sich ziehen.

Ziel der vorliegenden Erfindung ist die Verbesserung der Toleranz einer Gleitringdichtung mit einem aus einem Packungsring gebildeten Gleitring gegenüber Lageveränderungen der Welle, insbesondere gegenüber Radialversatz.

Ausgehend von dem eingangs genannten Stand der Technik wird diese Aufgabe erfindungsgemäß dadurch gelöst, daß der Packungsring stirnseitig zum Gegenring hin über die ihn haltende Kammer vorsteht, daß die mit dem Gleitring zusammenwirkende Stirnseite des Gegenrings eine größere radiale Ausdehnung aufweist als die Stirnseite des Gleitrings, und daß die stirnseitigen Ränder des Gleitrings abgerundet und verstärkt sind. Die erfindungsgemäße Ausführung bewirkt, daß der Gleitring bei Mittenversatz der Welle sowohl radial nach außen als auch radial nach innen auf der Stirnfläche des Gegenrings verschiebbar ist und seine Dichtfunktion dennoch ohne Einbußen ausüben kann. Die größere radiale Ausdehnung der Stirnseite des Gegenrings im Verhältnis zur Stirnseite des Gleitrings stellt dabei sicher, daß in jedem Fall die volle Stirnfläche des Packungsrings, welche die Dichtfläche bildet, mit dem Gegenring dichtend zusammenwirkt. Auf diese Weise kann nicht nur ein Radialversatz, sondern auch ein eventuell auftretender Winkelversatz ausgeglichen werden. Dabei wird der im Betrieb leicht zusammengepresste Packungsring aufgrund seiner Weichheit an einem Stirnflächenrand weiter zusammengepreßt, während er sich am anderen Stirnflächenrand leicht ausdehnt, indem er seiner entspannten Ruhelage entgegenstrebt. Ein möglicher Axialversatz wird in üblicher Weise dadurch ausgeglichen, daß das den Gleitring haltende Kammerbauteil axial beweglich gelagert und mit Federkraft beaufschlagt ist, so daß der Gleitring an den Gegenring stirnseitig angedrückt wird. Die vorliegende Anordnung zeichnet sich daher durch eine große Unempfindlichkeit gegenüber Lageveränderungen aus. Die Weichheit des Packungsrings führt zu einer Unempfindlichkeit gegen Kantenpressung und Taumelschlag; trockenlauffähige Pakkungsringe ermöglichen den Einsatz bei Trockengut mit schlechten Schmiereigenschaften und bei hohen Temperaturen.

Vorteilhafterweise beträgt der Überstand des Gleitrings über die ihn haltende Kammer mehr als 10% seiner Stirnflächenbreite, weiter vorzugsweise mehr als 20%, idealerweise etwa 30% seiner Stirnflächenbreite. Die Stirnflächenbreite bezeichnet dabei die Breite desjenigen Teils der Oberfläche des Pakkungsrings an seinem äußeren Umfang, der mit dem Gegenring in Berührung ist und dadurch die Dichtfläche bildet. In konstruktiver Hinsicht kann es sinnvoll sein, den Überstand des Packungsrings über die ihn haltende Kammer in Bezug zur Kammerbreite zu setzen. Der genannte Überstand des Packungsrings über die Kammer beträgt dann vorzugsweise mehr als 10%, idealerweise 20-30% der Kammerbreite. Diese Zahlen gelten in eingelaufenen, aber noch nicht durch Verschleiß veränderten Zustand des Gleitrings.

Ein möglichst großer Überstand des Gleitrings über die ihn haltende Kammer ist in zweierlei Hinsicht besonders vorteilhaft. Einerseits wird dadurch der Winkelbereich vergrößert, der beim Auftreten von Winkelversatz der Welle im Betrieb noch ausgeglichen werden kann, ohne daß die Gleitringkammer am Gegenring anschlägt. Dieser Gesichtspunkt spielt besonders dann eine Rolle, wenn nicht anderweitig konstruktiv eine Unterdrückung des Winkelversatzes der Welle bewirkt wurde. Weiterhin führt ein möglichst großer Überstand des Packungsrings über die ihn haltende Kammer zu einer Verlängerung der Betriebsdauer, falls sich die radiale Ausdehnung des Packungsrings während des Betriebs kontinuierlich verringert. Dies kann durch natürlichen Abrieb und Verschleiß, aber auch durch Setzen und Zusammenpressen des Packungsrings in Folge zunehmender Materialermüdung erfolgen. Bei ausreichendem Überstand des Packungsrings über die Kammer kann die Dicke des Pakkungsrings um bis zu 20% und mehr abnehmen, ohne daß die Kammer mit dem Gegenring in Berührung kommt.

Bei einem deutlich über die ihn haltende Kammer überstehenden Packungsring ist besonderes Augenmerk darauf zu richten, daß der Packungsring an den Rändern der Dichtfläche nicht ungewollt im Betrieb nach außen gepreßt wird, in den Spalt zwischen Kammer und Gegenring gelangt und dort, insbesondere durch die Einwirkung der Kanten der Kammer, verschlissen bzw. zerstört wird. Diese Gefahr erhöht sich besonders beim Auftreten starker Radialversätze der Welle und den damit einhergehenden radialen Kräften, die auf den Packungsring wirken und ihn um so stärker in Richtung der Kammerränder verformen, je größer der Überstand des Packungsrings über die Kammer ist. Dieser Gefahr kann insbesondere durch die zweckmäßige Ausführung des Packungsrings entgegengewirkt werden. Zunächst ist es vorteilhaft, mindestens die Ränder der die Dichtfläche bildenden Stirnfläche des Packungsrings abgerundet zu gestalten. Dabei ist der Krümmungsradius der abgerundeten Ecken vorzugsweise gleich dem halben bis zweifachen, idealerweise etwa gleich dem einfachen Abstand des Randes der den Gleitring haltenden Kammer von der Stirnseite des Gegenrings. Wenn der Krümmungsradius gleich diesem Abstand ist, beginnt die Abrundung des Packungsrings am Rand der Kammer. Die Abrundung des Packungsrings bewirkt, daß sich auch nach langer Betriebsdauer mit hohem Anpreßdruck und selbst beim Auftreten radialer Kräfte keine Ecken in Folge von Materialermüdung ausbilden und in den Spalt zwischen Kammer und Gegenring einwandern können.

Eine besonders vorteilhafte Ausführungsform des Packungsrings weist Verstärkungen an den Rändern der die Dichtfläche bildenden Stirnfläche auf. Dabei kann es sich beispielsweise um eine Faserverstärkung handeln. Um das Einwandern der Pakkungsdichtung in den Dichtspalt möglichst weitgehend zu verhindern, sollten die verstärkten Randbereiche der Stirnfläche des Packungsrings ausreichend groß ausgebildet sein; vorzugsweise sollte der verstärkte Bereich beiderseits einer Kante eine mindestens dem Abstand zwischen Kammer und Gegenring entsprechende Ausdehnung aufweisen. Bei der oben erwähnten besonders vorteilhaften Ausführungsform, bei der die Kanten abgerundet sind und der Krümmungsradius dem Abstand der Kammer vom Gegenring entspricht, sollte mindestens der abgerundete Bereich verstärkt sein. Auf diese Weise wird erreicht, daß der gesamte Überstand des Packungsrings über die Kammer hinaus an den Rändern verstärkt ist.

Der zwischen den Rändern liegende, die Gleitfläche bildende mittlere Teil der Stirnfläche besteht zweckmäßigerweise aus gut gleitfähigem, vorzugsweise aus trockenlauffähigem Material. Infolgedessen ist die Gleitringdichtung zur Abdichtung von trockenen pulvrigen oder feinkörnigen Stoffen besonders geeignet.

Zweckmäßigerweise werden Packungsringe aus miteinander verflochtenen Fäden verwendet; in diesem Fall enthalten vorteilhafterweise die Stirnflächenränder des Packungsrings Fäden höherer Verschleiß- und Zugfestigkeit als der dazwischen liegende, die Stirnfläche bildende Bereich. Für die Kantenverstärkung haben sich beispielsweise hochverschleißfeste Aramid-Garne bewährt. Die den mittleren Bereich der Stirnfläche bildenden Fäden bestehen beispielsweise aus besonders gleitfähigen, thermostabilen PTFE-Graphitgarnen, welche besonders bei Trockenlauf ohne zusätzliche Schmierung und gleichzeitig bei hohen Temperaturen bis 260° C eingesetzt werden können.

Die Erfindung wird im folgenden unter Bezugnahme auf die Zeichnungen beispielhaft erläutert. Es zeigen:

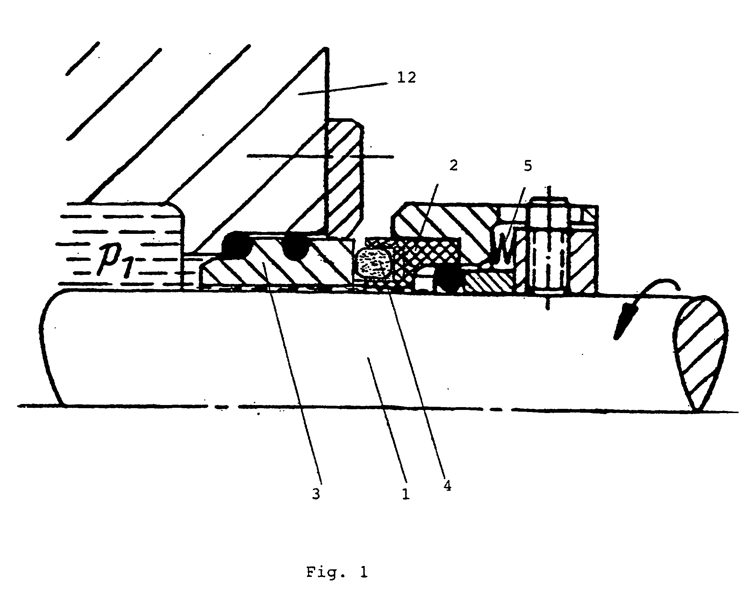

- Fig. 1: eine schematische Skizze einer erfindungsgemäßen Gleitringdichtung mit einem Packungsring als Gleitring;
- Fig. 2: einen vergößerten Querschnitt im Bereich der Packungsdichtung; und
- Fig. 3: einen Querschnitt durch einen vorteilhaften Packungsring.

Die Gleitringdichtung zur Abdichtung einer umlaufenden Welle 1 gegen ein Wellengehäuse 12 besteht im wesentlichen aus einem außenseitig angebrachten, mit der Welle rotierenden Kammerteil 2 mit einer den den Gleitring bildenden Packungsring 4 an drei Seiten einfassenden Kammer 8 und einem innenseitig befindlichen, der Kammer 8 öffnungsseitig zugewandten, stationär mit dem Wellengengehäuse verbundenen Gegenring 3. Kammerteil 2, Gegenring 3 und Packungsring 4 sind ringförmig um die Welle herum angeordnet; die Kammer 8 hat die Form einer Ringnut. Der Packungsring 8 kann als geschlossener Ring ausgeführt sein oder aus einem ringförmig gebogenen Stück bestehen; letztere Ausführung ist vergleichsweise kostengünstig, da die Packung von endlosem Vorrat zugeschnitten werden kann. Der Gegenring 3 ist drehfest und dicht mit dem Gehäuse 12 verbunden. Ohne Beeinträchtigung der erfindungsgemäßen Wirkung kann auch der Gleitring stationär und/oder innenseitig angeordnet sein, während der Gegenring dementsprechend rotierend und/oder außenseitig angeordnet sein kann. Der Packungsring 4 ist im Betrieb leicht zusammengepreßt und steht über die ihn haltende Kammer 8 im Kammerteil 2 öffnungsseitig über; seine dem Gegenring 3 zugewandte Stirnfläche 7 wirkt dichtend mit dessen Stirnfläche 9 zusammen.

Die dem Packungsring 4 zugewandte Stirnfläche 9 des Gegenrings 3 ist vorzugsweise eben und weist sowohl nach innen als auch nach außen größere radiale Abmessungen auf als die Stirnfläche 7 des Packungsrings 4, so daß sich bei einem Radialversatz der Welle 1 der Packungsring 4 auf der Stirnfläche 9 des Gegenrings 3 verschiebt, ohne daß dadurch die Dichtwirkung beeinträchtigt würde. Der zwischen den Rändern 6 der Kammer 8 des Gleitrings 2 und der Stirnfläche 9 des Gegenrings 3 bestehende Spalt erlaubt, in Verbindung mit der Nachgiebigkeit des Packungsrings, den Ausgleich eines möglichen Winkelversatzes der Welle 1 im Betrieb. Derartiger Winkelversatz entsteht durch eine Verkippung der Welle 1 und dem damit verbundenen Kammerteil 2 gegenüber dem Wellengehäuse und dem damit verbundenen Gegenring 3, z.B. infolge einer Wellenverbiegung unter Last. Bei einer Abweichung der Dichtflächen von der planparallelen Form wird der Packungsring an einem Stirnflächenrand weiter zusammengepreßt, während er sich am anderen Stirnflächenrand leicht ausdehnt, so daß seine Stirnfläche weiterhin vollständig am Gegenring anliegt und die Dichtwirkung erhalten bleibt. Das Kammerteil 2 ist axial beweglich gelagert und durch die Feder 5 mit einer Federvorspannung beaufschlagt. Der Gleitring wird daher automatisch axial nachgestellt, wodurch sowohl auftretender Axialversatz als auch ein Abrieb des Packungsrings 4 durch natürlichen Verschleiß ausgeglichen werden kann.

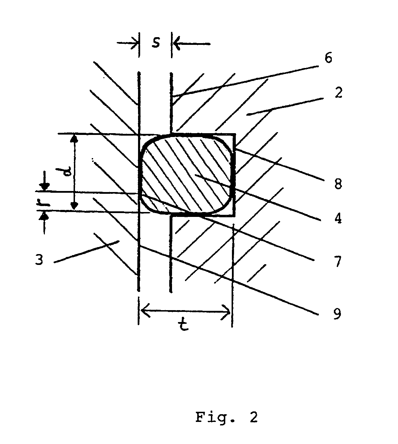

Wie in Fig. 2 besser zu erkennen, beträgt der Abstand s des Kammerrandes 6 von der Stirnseite 9 des Gegenrings 3 etwa 30% der Breite d der Kammer 8, welche durch den Abstand der beiden seitlichen Begrenzungsflächen der Kammer 8 bestimmt wird. Der Abstand t der hinteren Begrenzungswand der Kammer 8 von der Stirnseite 9 des Gegenrings 3 ist den Abmessungen des Packungsrings 4 angepaßt; bei quadratischem Querschnitt des Packungsrings 4 im unbelasteten Zustand ist dieser Abstand t gleich groß oder etwas kleiner als die Breite d der Kammer 8. Der Packungsring 4 weist abgerundete Kanten 10 mit einem Krümmungsradius r auf, der etwa gleich dem Abstand s des Kammerrandes 6 von der Stirnseite 9 des Gegenrings 3 ist. Auf diese Weise wird das Einwandern der stirnseitigen Kantenbereiche 10 des Packungsrings 4 in den Spalt zwischen dem Kammerrand 6 und der Stirnfläche 9 des Gegenrings 3 verhindert.

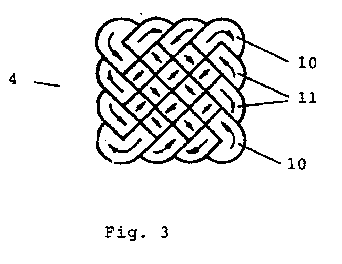

Der Packungsring 4 besteht, wie in Fig. 3 angedeutet ist, aus miteinander verflochtenen Fäden. Die Kantenbereiche 10 des Packungsrings 4 weisen eine Faserverstärkung auf; sie weisen beispielsweise verschleißfestes Aramidgarn auf, welches eine hohe Zug- und Verschleißfestigkeit besitzt. Die zwischen den Kanten 10 befindlichen Mittelbereiche 11 der Stirnfläche 7 des Packungsrings 4 weisen z.B. gleitlauffähiges Material wie PTFE-Graphitgarn auf, welches auch bei hohen Temperaturen und schlecht schmierendem Gut noch hinreichende Gleitlaufeigenschaften aufweist und insbesondere für Trockenlauf geeignet ist. Insofern ist die mit einem solchen Packungsring versehene Gleitringdichtung besonders zur Abdichtung von trockenem, pulvrigen oder feinkörnigem Gut geeignet; aber auch flüssige Stoffe können auf diese Weise abgedichtet werden. Die Weichheit des Gleitmaterials 11 des Packungsrings 4 reduziert die Materialanforderungen an den Gegenring 3 hinsichtlich der Verschleißfestigkeit; er kann beispielsweise aus Edelstahl hergestellt werden, welcher wesentlich kostengünstiger ist als das in der Gleitringdichtungstechnik weit verbreitete hochverschleißfeste Siliziumkarbid (SiC).

## Patentansprüche

1. Gleitringdichtung mit einem Gleitring und einem damit unter der Kraft einer Feder (5) dichtend zusammenwirkenden Gegenring (3), wobei der Gleitring von einem Pakkungsring (4) gebildet und in einer ihn an drei Seiten umfassenden Kammer (8) gehalten ist, **dadurch gekennzeichnet, daß** der Packungsring (4) stirnseitig zum Gegenring (3) hin über die Kammer vorsteht, daß die mit dem Packungsring (4) zusammenwirkende Stirnseite (9) des Gegenrings (3) eine größere radiale Ausdehnung als die Stirnseite (7) des Gleitrings (4) aufweist, und daß die stirnseitigen Ränder des Gleitrings (4) abgerundet und verstärkt sind.

2. Gleitringdichtung nach Anspruch 1, **dadurch gekennzeichnet, daß** der Überstand S des Gleitrings (4) über die Kammer größer ist als 10% der Breite seiner Stirnfläche (7).

3. Gleitringdichtung nach Anspruch 1 oder 2, **dadurch gekennzeichnet, daß** die Ränder der Gleitringstirnfläche (7) abgerundet sind.

4. Gleitringdichtung nach einem der Ansprüche 1 bis 3, **dadurch gekennzeichnet, daß** die Ränder der Gleitringstirnfläche (7) verstärkt sind.

5. Gleitringdichtung nach Anspruch 4, **dadurch gekennzeichnet, daß** die Ränder der Gleitringstirnfläche (7) eine Faserverstärkung (11) enthalten.

6. Gleitringdichtung nach Anspruch 1 bis 5, **dadurch gekennzeichnet, daß** der zwischen den Rändern befindliche mittlere Bereich der Gleitringstirnfläche (7) aus gleitfähigem Material besteht.

7. Gleitringdichtung nach Anspruch 6, **dadurch gekennzeichnet, daß** der zwischen den Rändern befindliche mittlere Bereich der Gleitringstirnfläche (7) aus trockenlauffähigem Material besteht.

8. Gleitringdichtung nach Anspruch 1 bis 7, **dadurch gekennzeichnet, daß** der Packungsring (4) miteinander verflochtene Fäden (10,11) enthält.

9. Gleitringdichtung nach Anspruch 8, **dadurch gekennzeichnet, daß** die Ränder der Gleitringstirnfläche (7) aus Fäden (10) höherer Verschleiß- und Zugfestigkeit bestehen als die dazwischen befindlichen, den mittleren Bereich der Stirnfläche bildenden Fäden (11).

10. Verwendung einer Gleitringdichtung nach einem der Ansprüche 1 bis 9 zur Abdichtung pulvriger oder feinkörniger Stoffe.

11. Verwendung einer Gleitringdichtung nach Anspruch 1 bis 10 zur Abdichtung von trockenen Stoffen.

## Claims

1. A face seal having a face seal ring and a counter ring (3) co-operating fluidtightly therewith under the force of a spring (5), wherein the face seal ring is formed by a packing ring (4) and is retained in a chamber (8) enclosing it on three sides, **characterised in that** at the end face the packing ring (4) projects beyond the chamber towards the counter ring (3), **in that** the end face (9) of the counter ring (3) co-operating with the packing ring (4) has a greater radial extension than the end face (7) of the counter ring (4), and **in that** the end-face edges of the face seal ring (4) are rounded and reinforced.

2. A face seal according to Claim 1, **characterised in that** the overhang S of the face seal ring (4) beyond the chamber is greater than 10 % of the width of its end face (7).

3. A face seal according to Claim 1 or 2, **characterised in that** the edges of the end face (7) of the face seal ring are rounded.

4. A face seal according to any one of Claims 1 to 3, **characterised in that** the edges of the end face (7) of the face seal ring are reinforced.

5. A face seal according to Claim 4, **characterised in that** the edges of the end face (7) of the face seal ring include a fibre reinforcement (11).

6. A face seal according to any one of Claims 1 to 5, **characterised in that** the zone of the end face (7) of the face seal ring situated between the edges consists of a low-friction material.

7. A face seal according to Claim 6, **characterised in that** the middle zone of the end face (7) of the face seal ring situated between the edges consists of material capable of dry running.

8. A face seal according to Claims 1 to 7, **characterised in that** the packing ring (4) contains interwoven filaments (10,11).

9. A face seal according to Claim 8, **characterised in that** the edges of the end face (7) of the face seal ring consist of filaments (10) of higher wear-resistance and tensile strength than the filaments (11) disposed therebetween forming the middle zone of the end face.

10. Use of a face seal according to any one of Claims 1 to 9 for sealing powdered or fine-granular substances.

11. Use of a face seal according to Claims 1 to 10 for sealing dry substances.

## Revendications

1. Etanchéité à bague de glissement comportant une bague de glissement et une contre-bague (3) coopérant de manière étanche avec celle-ci, sous la force d'un ressort (5), la bague de glissement étant formée par un joint annulaire et maintenue dans une chambre (8) l'entourant sur trois côtés, **caractérisée en ce que** le joint annulaire (4) dépasse frontalement de la chambre, vers la contre-bague, **en ce que** le côté frontal (9) , coopérant avec le joint annulaire, de la contre-bague (3), présente une plus grande étendue radiale que le côté frontal (7) de la bague de glissement, et **en ce que** les bords frontaux de la bague de glissement sont arrondis et renforcés.

2. Etanchéité à bague de glissement selon la revendication 1, **caractérisée en ce que** le débordement S de la bague de glissement (4) par rapport à la chambre est supérieur à 10 % de la largeur de sa surface frontale (7).

3. Etanchéité à bague de glissement selon la revendication 1 ou 2, **caractérisée en ce que** les bords de la surface frontale (7) de la bague de glissement sont arrondis.

4. Etanchéité à bague de glissement selon les revendications 1 à 3, **caractérisée en ce que** les bords de la surface frontale (7) de la bague de glissement sont renforcés.

5. Etanchéité à bague de glissement selon la revendication 4, **caractérisée en ce que** les bords de la surface frontale (7) de la bague de glissement contiennent un renfort de fibres.

6. Etanchéité à bague de glissement selon les revendications 1 à 5, **caractérisée en ce que** la zone centrale, se trouvant entre les bords, de la surface frontale (7) de la bague de glissement, est constituée en un matériau glissant.

7. Etanchéité à bague de glissement selon la revendication 6, **caractérisée en ce que** la zone centrale, se trouvant entre les bords, de la surface frontale (7) de la bague de glissement, est constituée en un matériau permettant la marche à sec.

8. Etanchéité à bague de glissement selon les revendications 1 à 7, **caractérisée en ce que** le joint annulaire (4) contient des fils (10, 11) entrelacés.

9. Etanchéité à bague de glissement selon la revendication 8, **caractérisée en ce que** les bords de la surface frontale (7) de la bague de glissement sont constitués de fils (10) qui présentent une plus grande résistance à l'usure et à la traction que les fils (11) se trouvant entre ceux-ci et formant la zone centrale de la surface frontale.

10. Utilisation d'une étanchéité à bague de glissement selon l'une des revendications 1 à 9 pour l'étanchéité de matières pulvérulentes ou à grains fins.

11. Utilisation d'une étanchéité à bague de glissement selon l'une des revendications 1 à 10 pour l'étanchéité de matières sèches.
